# EUROPÄISCHE PATENTANMELDUNG

(11) **EP 3 381 785 A1**
(43) Veröffentlichungstag der Anmeldung: **03.10.2018**
(21) Anmeldenummer: 17163704.4
(22) Anmeldetag: 29.03.2017
(51) Int. Cl.: B62M 1/24, B62M 1/26, B62M 1/30, B62M 15/00

(54) **ANTRIEBSVORRICHTUNG UND TRANSPORTMITTEL**

(71) Anmelder: Kautt & Sohn GmH, 6382 Büren NW (CH)
(72) Erfinder: KAUTT, Bernd, 6382 Büren NW (CH)
(74) Vertreter: Rutz & Partner

(57) **Zusammenfassung**

Die in einem Transportmittel (1) vorteilhaft einsetzbare Antriebsvorrichtung (2) umfasst einen ersten und einen zweiten Antriebshebel (211, 212), die erste Hebelendstücke (201) aufweisen, an denen vorzugsweise ein Betätigungselement (291, 292) vorgesehen ist, die zweite Hebelendstücke (202) aufweisen, die miteinander gekoppelt sind, die in vorzugsweise zueinander parallelen und voneinander beabstandeten Ebenen drehbar gehalten sind, und die mit einer Antriebswelle (34) gekoppelt sind, die in einer Lagervorrichtung (111) drehbar gelagert ist. Erfindungsgemäss ist jeder Antriebshebel (211; 212) über eine zwischen dem ersten und dem zweiten Hebelendstück (201, 202) angeordnete Primärwelle (241; 242) drehbar mit einem zugehörigen Primärhebel (221; 222) verbunden, der drehfest mit der Antriebswelle (34) verbunden ist; die zweiten Hebelendstücke (202) sind je direkt oder über eine Sekundärwelle (251; 252) und einen Sekundärhebel (231; 232) mit einer Hilfswelle (28) verbunden, die in der Lagervorrichtung (111) gehalten ist, und die Primärwellen (241; 242) und die Sekundärwellen (251; 252) jedes Antriebshebels (211; 212) sind durch Adaptionsvorrichtungen (2111, 2121) gegeneinander verschiebbar gehalten.

## Beschreibung

Die Erfindung betrifft eine Antriebsvorrichtung sowie ein Transportmittel, insbesondere ein Liegerad, mit einer solchen Antriebsvorrichtung.

Aus dem Stand der Technik sind zahlreiche Transportmittel bekannt, die durch Muskelkraft betrieben werden. Bekannt sind zwei- und dreirädrige Fahrräder mit einem Tretkurbelantrieb und einer Gliederkette zur Kraftübertragung. Bei Fahrrädern sitzt der Anwender zumindest annähernd aufrecht, was zu einer starken Belastung des Rückens und des Gesässes führt. Zudem besteht bei dieser Position des Anwenders ein hoher Luftwiderstand, der durch Muskelkraft überwunden werden muss. Es wurden daher bereits Liegeräder vorgeschlagen, die bequem bedient werden können und bei denen ein reduzierter Luftwiderstand auftritt.

Liegeräder, die der Anwender annähernd liegend benutzt, mit einem Tretkurbelantrieb sind z.B. aus der DE102005058245A1 bekannt. Nachteilig bei einem Tretkurbelantrieb bei Liegerädern ist der hohe Raumbedarf für die Kurbelbewegung, bei der die Fusspedalen in einer Kreisbewegung um eine Antriebswelle geführt werden. Hierdurch muss die Antriebsvorrichtung weiter entfernt vom Boden angeordnet werden, wodurch der Schwerpunkt höher zu liegen kommt, was die Stabilität nachteilig beeinflusst. Zudem müssen die Beine des Anwenders für die Kurbelbewegung stark aus der Liegeposition nach oben und nach unten ausgelenkt werden, was die Stabilität ebenfalls nachteilig beeinflusst. Ebenso führt die liegend ausgeführte Kurbelbewegung zu einer hohen muskulären Belastung des Anwenders.

Aus der DE102005009125A1 ist ein Fahrrad in der Art eines Liegerads bekannt, das einen Antrieb mit Schwinghebelpedalen aufweist. Die Schwinghebelpedalen sind über ein System aus Stahlseilzügen und Spannseilen mit der Antriebsachse gekoppelt. Dieser Aufbau ist kompliziert und aufwendig. Zu beachten ist ferner, dass die über verschiedene Wege geführten Zugseile viel Raum in Anspruch nehmen und den Anwender in seiner Bewegungsfreiheit erheblich beschränken. Der in Anspruch genommene Raum steht für andere Zwecke nicht mehr zur Verfügung.

Aus der DE2516677A1 ist ein Fahrrad mit einer Antriebsvorrichtung bekannt, die Antriebshebel aufweist, welche in der Ruhelage zumindest annähernd horizontal ausgerichtet sein können und bei Bedienung des Fahrrads nach oben und nach unten ausgelenkt werden. Ein Ende der Antriebshebel wird während eines Abschnitts der Hebelbewegung mit der Hinterachse gekoppelt und während des übrigen Verlaufs der Hebelbewegung von dieser entkoppelt. Die laufende Zu- und Entkopplung ist störungsanfällig und bedingt einen hohen Verschleiss. Die Kraftübertragung auf die Achse erfolgt zudem im Wesentlichen über Gleitreibung, was ineffizient ist. Zu beachten ist, dass der sitzende Anwender die Muskelkraft nicht optimal auf die Pedalen übertragen kann, weshalb mit einer schnellen Ermüdung zu rechnen ist.

Aus der US2003/0042059A1 ist ein Roller mit einem Hebelantrieb bekannt, der nur einen Hebel aufweist. Der Anwender betätigt den Hebel während der Fahrt durch eine auf-und-ab wippende Bewegung mit dem ganzen Körper. Diese Betätigungsbewegung ist ineffizient und vermindert die Fahrstabilität. Der Anwender hat keine Sitzmöglichkeit und der Luftwiderstand ist sehr hoch.

Der vorliegenden Erfindung liegt somit die Aufgabe zugrunde, eine verbesserte Antriebsvorrichtung zu schaffen, die vorteilhaft in einem Transportmittel, wie einem Liegerad einsetzbar ist. Ferner ist ein Transportmittel mit einer solchen Antriebsvorrichtung zu schaffen.

Die Antriebsvorrichtung soll durch einen Anwender manuell oder per Fuss ergonomisch vorteilhaft betätigbar sein.

Die Antriebsvorrichtung soll mittels einer möglichst gleichmässigen und muskelschonenden Bewegung betätigbar sein. Die Muskelkraft soll dabei effizient auf die Antriebsvorrichtung übertragen werden können.

Zudem soll die Antriebsvorrichtung einfach und stabil aufgebaut sein und kaum Wartung benötigen.

Weiterhin soll eine Übertragungsvorrichtung geschaffen werden, mittels der Antriebskräfte und Antriebsmomente raumsparend über grössere Distanzen praktisch ohne Verluste übertragbar sind. Die Antriebsmittel sollen dabei wenig Raum in Anspruch nehmen, sodass zwischen der Antriebsvorrichtung und angetriebenen Elementen nur ein geringer Querschnitt für die Übertragung der Antriebskräfte erforderlich ist.

Mittels der Übertragungsvorrichtung sollen sehr hohe Antriebsmomente praktisch verlustlos übertragbar sein, sodass die Übertragungsvorrichtung auch unabhängig von der erfindungsgemässen Antriebsvorrichtung universell in Maschinen einsetzbar ist, die nicht mit Muskelkraft betrieben werden. Die Kraftübertragung soll dabei sicher und gefahrlos über einen Transmissionskanal erfolgen können, der einen minimalen Querschnitt aufweist. Auch bei Berührung der Antriebsmittel während des Betriebs sollen Verletzungen weitgehend vermieden werden können. Trotz der Übertragung maximaler Kräfte und Antriebsmomente soll die Übertragungsvorrichtung auch nach langem Betrieb keine Wartung benötigen.

Die Übertragungsvorrichtung soll in einfacher Weise mit beliebigen Antriebsvorrichtungen und besonders vorteilhaft mit der erfindungsgemässen Antriebsvorrichtung koppelbar sein.

Die Antriebsvorrichtung und/oder die Übertragungsvorrichtung sollen besonders vorteilhaft im erfindungsgemässen Transportmittel zum Einsatz gelangen, welches von einem Anwender bequem und effizient bedient werden kann. Die Antriebsvorrichtung und/oder die Übertragungsvorrichtung sollen insbesondere in einem Liegerad vorteilhaft eingesetzt werden können und nur wenig Raum in Anspruch nehmen, sodass der Anwender über eine hohe Bewegungsfreiheit verfügt und für die weitere konstruktive Ausgestaltung des Liegerads viel Raum zur Verfügung steht. Aus der Liegeposition soll der Anwender seine Körperkraft optimal auf die Antriebsvorrichtung übertragen können, ohne zu ermüden.

Diese Aufgabe wird mit einer Antriebsvorrichtung und einem Transportmittel, insbesondere einem Liegerad gelöst, welche die in Anspruch 1 bzw. 11 angegebenen Merkmale aufweisen. Vorteilhafte Ausgestaltungen der Erfindung sind in weiteren Ansprüchen angegeben.

Die in einem Transportmittel, wie einem Liegerad mit zwei oder drei Rädern, vorteilhaft einsetzbare Antriebsvorrichtung umfasst einen ersten und einen zweiten Antriebshebel, die erste Hebelendstücke aufweisen, an denen vorzugsweise je ein Betätigungselement, wie ein Fusspedal, vorgesehen ist, die zweite Hebelendstücke aufweisen, die miteinander gekoppelt sind, die in vorzugsweise zueinander parallelen und voneinander beabstandeten Ebenen drehbar gehalten sind, und die mit einer Antriebswelle gekoppelt sind, die in einer Lagervorrichtung drehbar gelagert ist.

Erfindungsgemäss ist jeder Antriebshebel über eine zwischen dem ersten und dem zweiten Hebelendstück angeordnete Primärwelle drehbar mit einem zugehörigen Primärhebel verbunden, der drehfest mit der Antriebswelle verbunden ist. Die zweiten Hebelendstücke sind je direkt oder über eine Sekundärwelle und über einen Sekundärhebel mit einer Hilfswelle verbunden, die von der Lagervorrichtung gehalten ist. Die Primärwellen und die Sekundärwellen jedes Antriebshebels sind durch Adaptionsvorrichtungen gegeneinander verschiebbar gehalten.

Der erste und der zweite Antriebshebel, die nach oben ausgerichtet sind, werden manuell oder durch die Füsse des Anwenders vor und zurück bewegt. Z.B. werden die Antriebshebel symmetrisch zu einer Mittelachse ausgelenkt, die senkrecht zur Längsachse des Transportmittels und typischerweise parallel zur Vertikalen ausgerichtet ist. Die Antriebshebel werden mit einer gegenseitigen Phasenverschiebung von 180° mit einem Drehwinkel vor und zurück gedreht, der vorzugsweise in einem Bereich zwischen 60° und 120° liegt. Besonders bevorzugte Drehwinkel liegen im Bereich zwischen 80° und 100°. Während der erste Antriebshebel nach vorn oder zurück gedreht wird, wird der zweite Antriebshebel um dasselbe Mass zurück oder nach vorn gedreht.

Entsprechend den Abmessungen der Primärhebel, deren Länge einem Bruchteil der Länge der Antriebshebels entspricht, werden die Antriebshebel bei der Vor- und Zurückbewegung alternierend angehoben und abgesenkt. Bei dieser Bewegung der Antriebshebel werden die Primärhebel mit der Antriebswelle jeweils um 360° gedreht, wodurch das Transportmittel über eine Übertragungsvorrichtung angetrieben wird.

Während die Primärhebel die Antriebswelle in einer Kreisbahn umlaufen, werden die an den Antriebshebeln vorgesehenen Pedalen oberhalb der Antriebswelle entlang einer in sich geschlossenen Bewegungskurve geführt, die etwa der Form einer langgestreckten Ellipse entspricht. Da die Antriebshebel vor und zurück bewegt und nicht um die Antriebswelle gedreht werden, benötigt die Antriebsvorrichtung nur wenig Raum. Die Antriebsvorrichtung kann daher tief gesetzt und vom Anwender bequem bedient werden. Der Anwender kann die Pedalen jeweils kraftvoll nach vorne stossen, sodass die Muskelkraft ideal auf die Antriebsvorrichtung übertragbar ist. Der Anwender kann mit seinen Beinen über eine Hälfte der Bewegungskurve somit eine kraftvolle Stossbewegung ausführen, weshalb hohe Drehmomente über den gesamten Arbeitsbereich auf die Antriebswelle übertragen werden können. Es resultiert somit eine ergonomisch bevorzugte Bewegungskurse, die bewirkt, dass Muskelkräfte effizienter übertragen und Ermüdungserscheinungen reduziert oder verzögert werden können.

Anstelle der Antriebshebel, die einerseits durch die Primärhebel und die Antriebswelle und andererseits gegebenenfalls durch die Sekundärhebel und die Hilfswelle miteinander verbunden sind, werden somit die kürzeren Primärhebel um die Antriebswelle gedreht. Aufgrund der resultierenden alternierenden vertikalen Bewegungen der Antriebshebel mit einer Bewegung der Primärwellen und Sekundärwellen relativ zueinander wird erfindungsgemäss ein Freilauf der Primärwellen oder der Sekundärwellen derart vorgesehen, so dass sich diese nach Bedarf relativ zueinander, vorzugsweise axial den Antriebshebeln, bewegen können.

In einer vorzugsweisen Ausgestaltung ist vorgesehen, dass die Adaptionsvorrichtungen einen im oder am zugehörigen Antriebshebel vorgesehenen und vorzugsweise parallel dazu ausgerichteten Führungskanal aufweisen, innerhalb dessen die zugehörige Primärwelle oder die zugehörige Sekundärwelle verschiebbar und drehbar gelagert ist. Die Primärhebel oder die Sekundärhebel können daher gegeneinander gedreht werden, während die sich gegeneinander verschiebenden Primärwellen und Sekundärwellen den erforderlichen Freilauf erhalten, indem sich die Primärwellen oder Sekundärwellen im zugeordneten Führungskanal vorzugsweise entlang der Längsachse des zugehörigen Antriebshebels bedarfsweise verschieben können.

Vorzugsweise sind die Adaptionsvorrichtungen an den Antriebshebeln jeweils an dem Endstück angeordnet, das dem Endstück mit den Betätigungselementen bzw. den Fusspedalen gegenüber liegt. Die Adaptionsvorrichtung wird daher in den Bereich verschoben, in dem geringere Kräfte und somit geringere Reibungsverluste auftreten. Unabhängig von der Anordnung der Adaptionsvorrichtung werden für die Primärwellen und Sekundärwellen hochwertige Drehlager eingesetzt, die verlustfrei arbeiten. Für die Primärwellen oder Sekundärwellen, die innerhalb einer zugehörigen Adaptionsvorrichtung verschoben werden, werden vorzugsweise hochwertige Gleitlager eingesetzt.

Alternativ können die Adaptionsvorrichtungen gelenkig ausgebildete Antriebshebel umfassen, die zwischen den Primärwellen und den Sekundärwellen einen ersten und einen zweiten Hebelabschnitt aufweisen, die durch ein Hebelgelenk miteinander verbunden sind. Die Primärhebel oder die Sekundärhebel können daher gegeneinander gedreht werden, während die sich gegeneinander verschiebenden Primärwellen und Sekundärwellen den erforderlichen Freilauf erhalten, indem eine gegenseitige Drehung der beiden Hebelabschnitte des Antriebshebels verfolgt. Bei dieser vorteilhaften Ausgestaltung der Adaptionsvorrichtungen werden Reibungsverluste praktisch vollständig vermieden.

Die Primärwellen und Sekundärwellen repräsentieren Gelenkverbindungen, die auch mit anderen Mitteln realisiert werden können. Die im Führungskanal geführte Primärwelle oder Sekundärwelle kann auch als Führungsstift ausgebildet und gegebenenfalls im Führungskanal verankert sein. Durch den in den Führungskanal eingreifenden Führungsstift wird der Antriebshebel präzise geführt. Durch die präzise Führung und die damit verbundene gleichmässige Bewegung wird die Antriebsachse über das erste Kopplungsrad gleichmässig und optimal angetrieben. Zur Vermeidung von Gleitreibung wird der Führungsstift bzw. die Sekundärwelle im Bereich des Eingriffs in den Führungskanal vorzugsweise mit Gleitlagerelementen oder Rollenlagern versehen. In weiteren vorzugsweisen Ausgestaltungen sind Halteelemente vorgesehen, welche den Führungsstift bzw. die Primärwelle oder Sekundärwelle innerhalb des Führungskanals verschiebbar halten

Die erfindungsgemässe Antriebsvorrichtung mit den Antriebshebeln, den Primärhebeln und, soweit vorhanden, den Sekundärhebeln, die gelenkig miteinander sowie mit der Antriebswelle und der Hilfswelle verbunden sind, ist grundsätzlich ein Hebelantrieb.

Die Antriebshebel, Primärhebel und Sekundärhebel können in Form einteiliger oder mehrteiliger Längsprofile, Stäbe, Stangen mit gerundetem oder rechteckigen Profil, insbesondere Gewindestangen vorliegen, die in der Länge vorzugsweise justierbar sind. Vorzugsweise sind teleskopisch verstellbare Primärhebel und/oder Sekundärhebel vorgesehen.

In vorzugsweisen Ausgestaltungen werden die Antriebswelle und die Hilfswelle miteinander gekoppelt, sodass sie synchron verlaufende Bewegungen ausführen. Diese Kopplung kann durch Antriebsketten oder Zahnräder erfolgen. Vorzugsweise erfolgt die Kopplung durch die Verwendung von Kopplungsrädern, die vorzugsweise identisch ausgebildet sind.

Bei der Verwendung von z.B. scheibenförmigen Kopplungsrädern können die Primärhebel und/oder die Sekundärhebel vorteilhaft in diese Kopplungsräder integriert sein. Der Materialanteil zwischen einem exzentrischen Anknüpfungspunkt der Primärwellen oder Sekundärwellen und der Achse der Scheibe oder des Rades bzw. der dortigen Antriebswelle oder Hilfswelle bildet dabei den Primärhebel oder den Sekundärhebel. Die Antriebsvorrichtung kann mittels der miteinander gekoppelten Kopplungsräder vorteilhaft synchronisiert und stabilisiert werden.

In bevorzugten Ausgestaltungen ist vorgesehen, dass die Antriebswelle wenigstens ein erstes Kopplungsrad drehfest hält, welches gegebenenfalls exzentrisch mit der zugehörigen Primärwelle verbunden ist, sodass der zugehörige Primärhebel integraler Bestandteil des ersten Kopplungsrads ist, und dass die Hilfswelle vorzugsweise ein zweites Kopplungsrad vorzugsweise drehfest hält, welches gegebenenfalls exzentrisch mit der zugehörigen Sekundärwelle verbunden ist, sodass der zugehörige Sekundärhebel integraler Bestandteil des zweiten Kopplungsrads ist. Das erste und das zweite Kopplungsrad und somit die Antriebswelle und die Hilfswelle können dadurch vorteilhaft miteinander gekoppelt werden. Dazu werden die Kopplungsräder vorzugsweise als Zahnräder ausgebildet, die ineinander eingreifen. Die mit dem ersten oder zweiten Antriebshebel betriebenen Primär- und Sekundärhebel können daher vorteilhaft in die beiden Kopplungsräder integriert werden. In besonders bevorzugten Ausgestaltungen wird jedem Antriebshebel ein paar von Kopplungsrädern zugeordnet, in die die Primärerhebung und Sekundärhebel vorzugsweise integriert werden. Bei der Verwendung von zwei Paaren von Kopplungsrädern resultiert ein vollständig symmetrischer Aufbau der Antriebsvorrichtung, welcher störende Momente eliminiert und eine hohe Laufruhe gewährleistet.

Zur Justierung der Antriebsvorrichtung ist der Abstand der Primärwellen von der Antriebswelle und/oder der Abstand der Sekundärwellen von der Hilfswelle vorzugsweise durch entsprechende Positionierung der Primärwellen oder Sekundärwellen am ersten oder zweiten Kopplungsrad oder durch Einstellung der Länge der Primärhebel oder der Sekundärhebel festlegbar.

Vorzugsweise können die Primärwellen und/oder die Sekundärwellen auf dem zugehörigen Kopplungsrad in mehreren definierten Positionen wahlweise verankert werden. Dazu weisen die Kopplungsräder und/oder die Primärhebel oder Sekundärhebel vorzugsweise mehrere Aufnahmeöffnungen, wie Bohrungen, auf, in denen die eingeführten Primärwellen und/oder Sekundärwellen verankert werden können. Die Aufnahmeöffnungen sind z.B. radial gegeneinander verschoben. Durch die Änderung der Position der Primärwelle wird die Länge des Antriebshebels bezüglich der Antriebsachse erhöht oder reduziert, was den Kraftaufwand zum Antrieb bzw. den Pedalweg reduziert oder erhöht. Die Antriebsvorrichtung kann daher an das vom Transportmittel befahrene Gelände angepasst werden. So kann beispielsweise vor einem Anstieg oder einer Abfahrt eine andere Position eingestellt werden. Vorzugsweise wird ein vom Anwender bedienbarer Schaltmechanismus vorgesehen, mittels dessen die Hebellängen vorzugsweise automatisch einstellbar sind. Diesbezüglich sind Primärhebel oder Sekundärhebel in der Ausgestaltung von ineinander eingreifenden Gewindeelementen, z.B. Gewindehülsen und Gewindestangen besonders vorteilhaft. Ein entsprechendes Gewindeelement z.B. die Gewindestange, kann durch einen Antriebsmotor gedreht werden können, wodurch die Übersetzung stufenlos änderbar ist. Die Stromversorgung dieser Antriebsmotoren kann z.B. mittels Batterien erfolgen.

Die Antriebswelle der erfindungsgemässen Antriebsvorrichtung kann mit beliebigen Übertragungsmitteln wie Antriebsketten oder Kardanwellen gekoppelt werden.

Besonders vorteilhaft kann die erfindungsgemässe Antriebsvorrichtung mit einer erfindungsgemässen Übertragungsvorrichtung gekoppelt werden. Die Antriebswelle der Antriebsvorrichtung und eine erste Übertragungswelle der Übertragungsvorrichtung können dabei identisch sein; d.h., die Antriebsvorrichtung und die Übertragungsvorrichtung weisen eine gemeinsame Welle auf, die nachstehend bei Betrachtung der Antriebsvorrichtung als Antriebswelle und bei Betrachtung der Übertragungsvorrichtung als erste Übertragungswelle bezeichnet wird.

Erfindungsgemäss ist diese erste Übertragungswelle durch Zugelemente, die vorzugsweise als Seile oder Zugstäbe ausgebildet sind, mit einer zweiten Übertragungswelle verbunden. An den beiderseitigen Enden der Zugelemente sind Kopplungselemente vorgesehen, die mit den Übertragungswellen koppelbar sind. Die erste und zweite Übertragungswelle sind vorzugsweise als Kurbelwellen ausgebildet, die mehrere Kurbeln aufweisen, die je mit einem der Kopplungselemente der Zugelemente verbunden sind. An der ersten Übertragungswelle entlang deren Längsachse sind somit seitlich versetzt erste Kurbeln angeordnet, die je durch eines der Zugelemente mit einem von mehreren zweiten Kurbeln verbunden sind, die an der zweiten Übertragungswelle entlang deren Längsachse seitlich versetzt angeordnet sind. Die ersten und zweiten Kurbeln, die Segmente der ersten bzw. zweiten Übertragungswelle bilden, weisen je zwei Kurbelplatten auf, die mit benachbarten Teilen der ersten bzw. zweiten Übertragungswelle verbunden sind und die durch eine Lagerwelle miteinander verbunden sind, die dem Halten je eines Kopplungselements der Zugelemente dient.

Die Kopplungselemente umfassen vorzugsweise Lagerhülsen oder Wälzlager, die von den Lagerwellen der Kurbeln gehalten werden und die bei Drehungen relativ zu den Lagerwellen kaum Reibungsverluste verursachen.

Die Zugelemente sind im Gegensatz zu Antriebsketten praktisch beliebig belastbar und wartungsfrei. Zudem können die Zugelemente in einem sehr engen Transmissionskanal verlaufen, der vorteilhaft in die Rahmenstruktur eines Fahrzeugs, insbesondere eines Fahrrads integriert werden kann. Dabei können die flexiblen aber nicht dehnbaren Zugelemente vorteilhaft über Umlenkräder in den Transmissionskanal eingeführt und aus dem Transmissionskanal hinaus geführt werden. Der Querschnitt des Transmissionskanals kann daher auf wenige Quadratzentimeter, praktisch den Querschnitt der Zugelemente, reduziert werden, sodass maximale Antriebsmomente über einen minimalen Querschnitt übertragen werden können.

Vorzugsweise sind an der ersten und zweiten Übertragungswelle, die vorzugsweise identisch ausgestaltet und ausgerichtet sind, drei erste bzw. zweite Kurbeln vorgesehen, die schrittweise um 120° um die erste bzw. zweite Übertragungswelle gegeneinander verdreht angeordnet und derart ausgerichtet sind, dass die zueinander korrespondierenden ersten und zweiten Kurbeln zumindest annähernd parallel zueinander ausgerichtet sind. Während des Betriebs laufen die erste und zweite Übertragungswelle daher synchron. Bei dieser effizienten Ausgestaltung der Übertragungsvorrichtung ist stets mindestens eines der Zugelemente belastet, sodass die erste und die zweite Übertragungswelle fest gekoppelt sind und eine gleichmässige Kraftübertragung erfolgt.

Die Elemente der Antriebsvorrichtung und der Übertragungsvorrichtung können aus verschiedenen Materialien, insbesondere Metall und Kunststoff gefertigt werden. Besonders bevorzugt sind der erste Antriebshebel und/oder der zweite Antriebshebel und/oder das erste Kopplungsrad und/oder das zweite Kopplungsrad aus Stahl und/oder einem faserverstärkten Kunststoff und/oder aus einem karbonfaserverstärkten Material gefertigt. Hierdurch wird eine optimale Stabilität und Langlebigkeit bei reduziertem Gesamtgewicht erreicht. Die einzelnen Vorrichtungsteile können daher wahlweise aus unterschiedlichen Materialien gefertigt werden.

Die erfindungsgemässe Antriebsvorrichtung und die erfindungsgemässe Übertragungsvorrichtung können in Kombination miteinander, aber auch unabhängig voneinander vorteilhaft verwendet werden. Die Antriebsvorrichtung und/oder die Übertragungsvorrichtung können in Kombination oder unabhängig voneinander in beliebige Maschinen eingebaut werden. Die erfindungsgemässe Übertragungsvorrichtung, die es erlaubt, grosse Kräfte und Drehmomente von einer ersten auf eine zweite Übertragungswelle und/oder von der zweiten auf die erste Übertragungswelle sicher und gefahrlos über grosse Distanzen zu übertragen, kann vorteilhaft z.B. in Produktionsanlagen, Fertigungsanlagen, oder Roboteranlagen eingesetzt werden. Die Übertragungsvorrichtung kann für den Antrieb oder Abtrieb eingesetzt werden. Eine Kontaktierung der Zugelemente z.B. mit einer Hand führt kaum zu Verletzungen, da die Zugelemente axial verschoben werden und, dies im Gegensatz zu Antriebsketten, eine glatte Oberfläche aufweisen. Sofern flexible Zugelemente, wie Drahtseile, verwendet werden, können diese auch z.B. mittels Umlenkrollen entlang von Kurven geführt werden. Die Übertragungsvorrichtung kann beliebig oder beliebig klein ausgeführt werden, sodass vorteilhafte Anwendungen in allen technischen Bereichen, insbesondere in der Robotertechnik aber auch in der Medizintechnik möglich sind, z.B. um verletzte, degenerierte oder fehlerhaft ausgebildete Gliedmassen zu ersetzen oder zu unterstützen.

Vorteilhaft kann ein zwei- oder dreirädriges Liegerad mit einem Liegesitz, welcher auf einer Rahmenstruktur angebracht ist, mit einer erfindungsgemässen Antriebsvorrichtung und/oder mit einer erfindungsgemässen Übertragungsvorrichtung ausgerüstet werden.

Vorzugsweise umfasst das Transportmittel einen Elektromotor, als Unterstützungsantrieb und/oder als Zusatzantrieb, der vorteilhaft in die Rahmenstruktur integriert und mit der Antriebswelle der Antriebsvorrichtung oder einer Übertragungswelle der Übertragungsvorrichtung gekoppelt wird.

Die erfindungsgemässe Antriebsvorrichtung 2 kann optimiert werden, indem alle gelenkigen Verbindungen mit reibungsarmen Lagerelementen, wie Wälzlagern, z.B. Kugellagern, versehen werden. Vorzugsweise werden die Primärwellen 221, 222 und Sekundärwellen 321, 322 mittels Wälzlagern in den Antriebshebeln 211, 212 gehalten.

Nachfolgend wird die Erfindung anhand von Zeichnungen näher erläutert. Dabei zeigt:
- Fig. 1a: ein erfindungsgemässes Transportmittel 1 mit drei von einer Rahmenstruktur 11 gehaltenen Laufrädern 121, 122, 123, das mit einer erfindungsgemässen Antriebsvorrichtung 2, die mittels zwei Antriebshebeln 211, 212 und Betätigungselementen 291, 292 betätigt wird und die mit einer erfindungsgemässen Übertragungsvorrichtung 3 gekoppelt ist;
- Fig. 1b: das Transportmittel 1 von Fig. 1a von der anderen Seite gesehen mit einem Längsschnitt durch die Rahmenstruktur 11, die frontseitig eine Lagervorrichtung 111 für die Antriebsvorrichtung 2 und daran anschliessend einen aufgeschnitten dargestellten Transmissionskanal 110 aufweist, in dem Kraftübertragungsmittel 31, 32, 33 der Übertragungsvorrichtung 3 geführt sind;
- Fig. 2a: die als Hebelantrieb ausgebildete Antriebsvorrichtung 2 von Fig. 1a und die damit gekoppelte Übertragungsvorrichtung 3, die mit weiteren Kraftübertragungsmitteln 4 gekoppelt ist;
- Fig. 2b: die Antriebsvorrichtung 2 von Fig. 2a, erweitert mit zwei miteinander gekoppelten Kopplungsrädern 261, 262 und einer symbolisch gezeigten Bewegungskurve 9, entlang der die Betätigungselemente 291, 292 beim Betrieb der Antriebsvorrichtung 2 verlaufen;
- Fig. 3a: die Antriebsvorrichtung 2 von Fig. 2a;
- Fig. 3b: die Antriebsvorrichtung 2 von Fig. 2b;
- Fig. 4a-f: die Antriebsvorrichtung 2 von Fig. 2a mit der Darstellung der während des Betriebs sequenziell auftretenden Positionen und Ausrichtungen des ersten Antriebshebels 211 und des Betätigungselements 291, welches eine Hälfte der Bewegungskurve 9 durchläuft;
- Fig. 5a: die erfindungsgemässe Übertragungsvorrichtung 3 von Fig. 1b mit drei Zugelementen 31, 32, 33, mittels denen eine erste Übertragungswelle 34, die vorzugsweise identisch zur Antriebswelle 34 der Antriebsvorrichtung 2 ist, und eine zweite Übertragungswelle 35, die identisch zur ersten Übertragungswelle 34 ausgestaltet und identisch ausgerichtet ist, über eine beliebige Distanz miteinander koppelbar sind;
- Fig. 5b: die erste Übertragungswelle 34 von Fig. 5a in der Ausgestaltung einer Kurbelwelle mit Kurbeln 341, 342, 343, die je zwei Kurbelplatten 302 aufweisen, die durch eine Lagerwelle 301 miteinander verbunden sind, welche wie in Fig. 5a gezeigt, je in einer Lageröffnung 3310 eines Kopplungselements 331 eines Zugelements 33 gehalten sind;
- Fig. 6a: einen Teil einer Antriebsvorrichtung 2 in einer ersten vorzugsweisen Ausgestaltung nur mit dem ersten Antriebshebel 211, der durch eine Primärwelle 241 direkt mit dem ersten Kopplungsrad 261 und durch eine in der Adaptionsvorrichtung 2111 bzw. im entsprechenden Führungskanal 2110 gehaltene Sekundärwelle 251 mit dem zweiten Kopplungsrad 262 verbunden ist;
- Fig. 6b: den Teil der Antriebsvorrichtung 2 von Fig. 6a mit einer symbolisch gezeigten Lagerplatte 111, mittels der die Antriebswelle 34 und die Hilfswelle 28 der Antriebsvorrichtung 2 gehalten sind;
- Fig. 7a: einen Teil einer Antriebsvorrichtung 2 in einer zweiten vorzugsweisen Ausgestaltung nur mit dem ersten Antriebshebel 211, der durch die in der Adaptionsvorrichtung 2111 bzw. im entsprechenden Führungskanal 2110 gehaltene Primärwelle 241 mit dem ersten Kopplungsrad 261 und durch die Sekundärwelle 251 direkt mit dem zweiten Kopplungsrad 262 verbunden ist;

- Fig. 7b: den Teil der Antriebsvorrichtung 2 von Fig. 7a mit einer symbolisch gezeigten Lagerplatte 111, mittels der die Antriebswelle 34 und die Hilfswelle 28 der Antriebsvorrichtung 2 gehalten sind;
- Fig. 8a: einen Teil einer Antriebsvorrichtung 2 in einer dritten vorzugsweisen Ausgestaltung nur mit dem ersten Antriebshebel 211, der durch die Primärwelle 241 direkt mit dem ersten Kopplungsrad 261 und über ein Hebelgelenk 211C und einen Hebelabschnitt 211B, welche die Adaptionsvorrichtung 2111 bilden, sowie die Sekundärwelle 251, mit dem zweiten Kopplungsrad 262 verbunden ist;
- Fig. 8b: den Teil der Antriebsvorrichtung 2 von Fig. 8a mit einer symbolisch gezeigten Lagerplatte 111, mittels der die Antriebswelle 34 und die Hilfswelle 28 der Antriebsvorrichtung 2 gehalten sind;
- Fig. 9a: einen Teil einer Antriebsvorrichtung 2 in einer vierten vorzugsweisen Ausgestaltung nur mit dem ersten Antriebshebel 211, der durch die Primärwelle 241 direkt mit dem ersten Kopplungsrad 261 und über die Adaptionsvorrichtung 2111 bzw. den Führungskanal 2110 direkt mit der Hilfswelle 28 verbunden ist, die gleichzeitig die Sekundärwelle 251 bildet; und
- Fig. 9b: den Teil der Antriebsvorrichtung 2 von Fig. 9a mit einer symbolisch gezeigten Lagerplatte 111, mittels der die Antriebswelle 34 und die Hilfswelle 28 der Antriebsvorrichtung 2 gehalten sind.

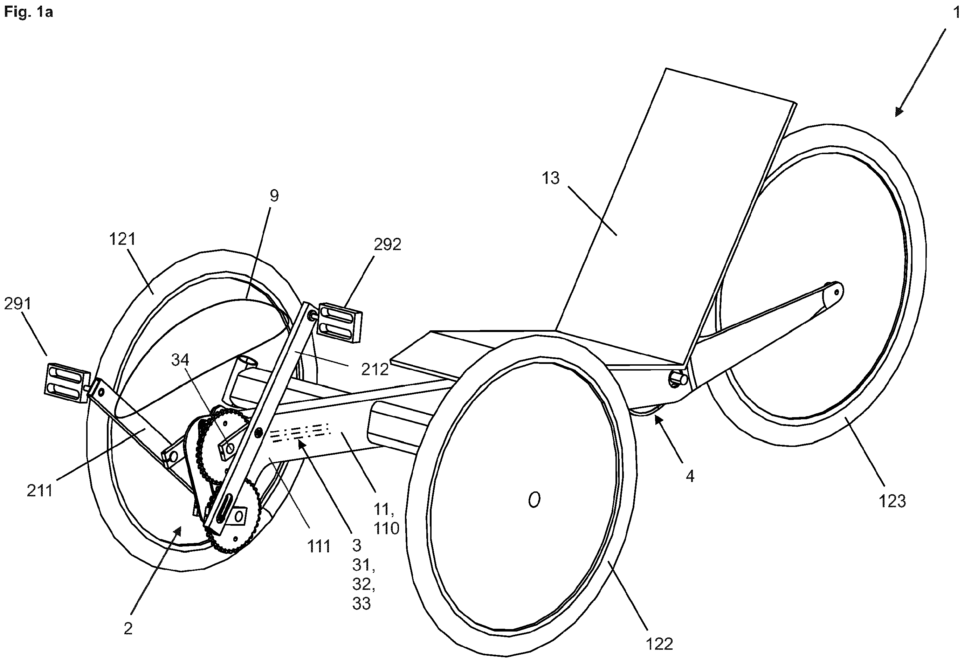

Fig. 1a zeigt ein erfindungsgemässes Transportmittel 1 mit drei Laufrädern 121, 122, 123, welche an einer Rahmenstruktur 11 befestigt sind. An der Rahmenstruktur 11 ist ferner ein Liegesitz 13 angebracht, auf welchem der Anwender in einer zumindest annähernd liegenden Position das Transportmittel 1 bequem bedienen kann. Die an einer Lagervorrichtung 111 der Rahmenstruktur 11 befestigte Antriebsvorrichtung 2 umfasst zwei nach oben gerichtete und zur Vertikalen geneigte Antriebshebel 211, 212 mit Bedienungselementen 291, 292 bzw. Fusspedalen, die vom Anwender betätigt und entlang einer schematisch gezeigten Bewegungskurve 9 verschoben werden können, um eine Antriebswelle 34 anzutreiben.

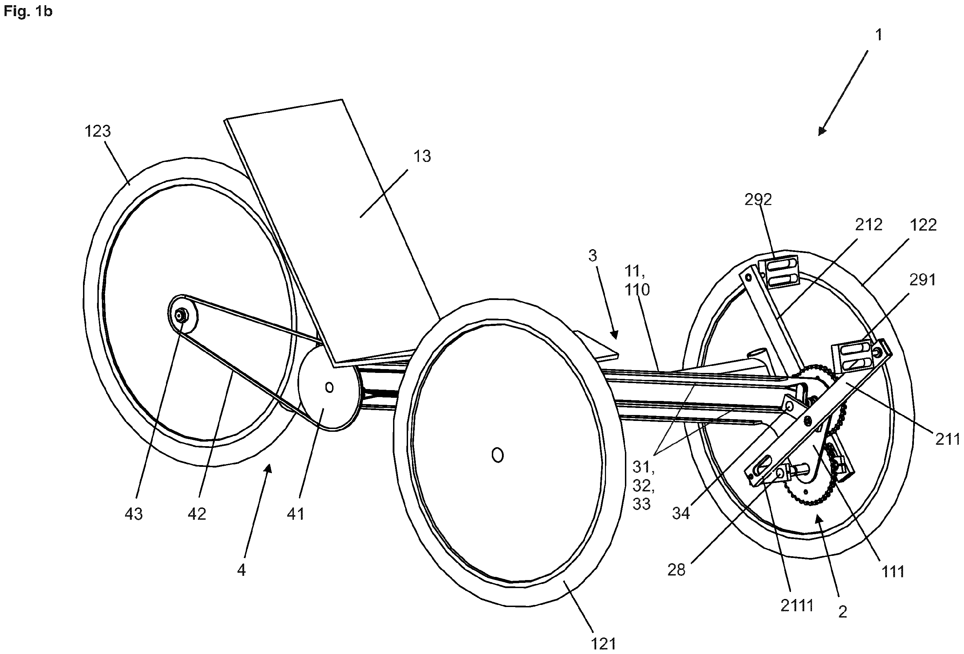

Die Antriebswelle 34 der Antriebsvorrichtung 2 ist über eine erfindungsgemässe Übertragungsvorrichtung 3 und weitere Kraftübertragungsmittel 4 mit dem Hinterrad 123 des Transportmittels 1 gekoppelt. Die weiteren Kraftübertragungsmittel 4 umfassen ein mit der Übertragungsvorrichtung 3 gekoppeltes erstes Kraftübertragungsgrad 41, welches über einen Riemen oder eine Kette 42 ein zweites Kraftübertragungsgrad 43 antreibt, das mit dem Hinterrad 123 verbunden und koaxial dazu ausgerichtet ist (siehe Fig. 1b).

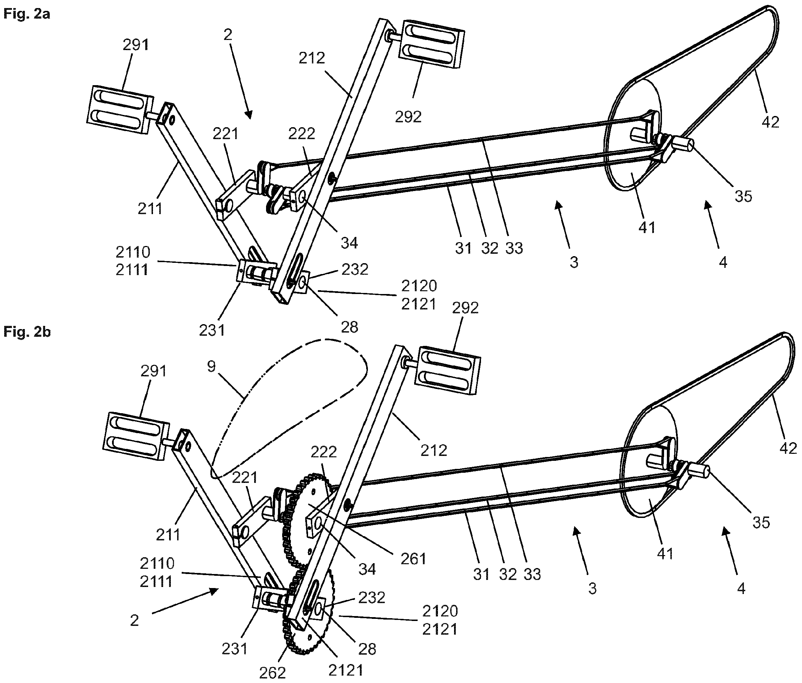

Die Übertragungsvorrichtung 3 umfasst Zugelemente 31, 32, 33, die mit der Antriebswelle 34 verbundenen und durch einen in der Rahmenstruktur 11 integrierten Transmissionskanal 110 nach hinten zu einer zweiten Übertragungswelle 35 (siehe Fig. 2a) geführt sind, von der das Kraftübertragungsgrad 41 angetrieben wird.

Fig. 1b zeigt das Transportmittel 1 von Fig. 1a von der anderen Seite mit der entlang der Längsachse geschnittenen Rahmenstruktur 11. Innerhalb des aufgeschnittenen Transmissionskanals 110 sind die Zugelemente 31, 32, 33 bis zur Antriebswelle 34 geführt, die als Kurbelwelle ausgebildet ist und die einen gemeinsamen Bestandteil der Antriebsvorrichtung 2 und der Übertragungsvorrichtung 3 bildet. Sofern die Antriebsvorrichtung 2 und die Übertragungsvorrichtung 3 unabhängig voneinander realisiert werden, so ist jede dieser Vorrichtungen 2, 3 mit einer solchen Welle versehen, d.h. die Antriebsvorrichtung weist eine Antriebswelle auf und die Übertragungsvorrichtung weist eine erste Übertragungswelle auf, die von einer Antriebsvorrichtung direkt oder indirekt angetrieben wird.

Sofern die Antriebsvorrichtung 2 unabhängig von der Übertragungsvorrichtung 3 verwendet wird, kann die Antriebswelle 34 beliebig ausgestaltet und an beliebige Übertragungsvorrichtungen angepasst sein. Z.B. kann die Antriebswelle 34 zylindrisch ausgebildet und an einem Ende mit dem Kraftübertragungsrad 41 verbunden sein. In diesem Falle müsste hingegen die Antriebskette 42 nach hinten geführt werden, was mit den eingangs beschriebenen Nachteilen verbunden ist.

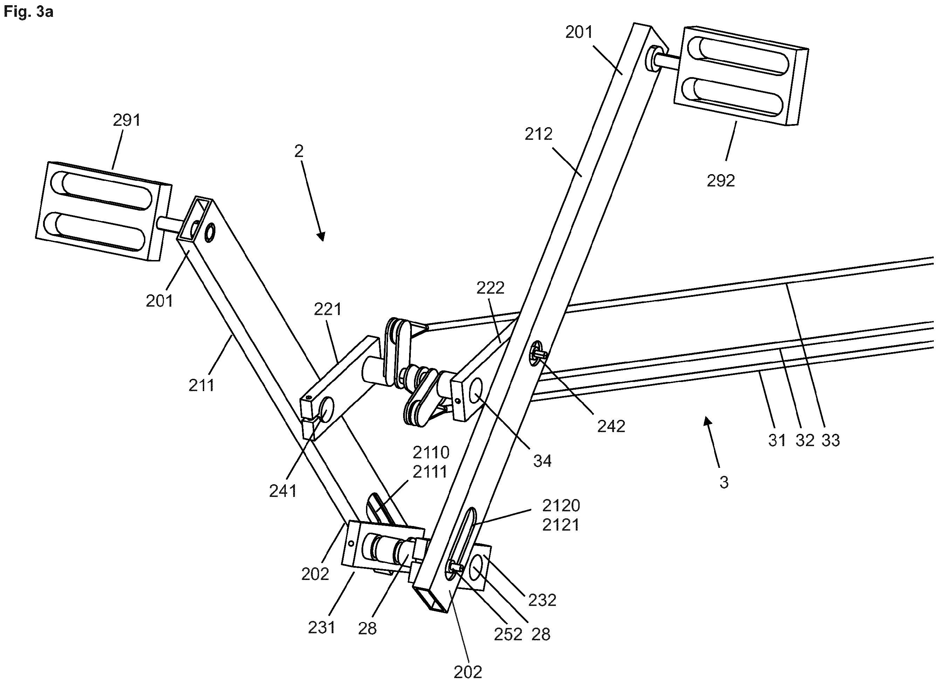

Fig. 2a zeigt die aus dem Transportmittel von Fig. 1 entnommene Antriebsvorrichtung 2 und die damit gekoppelte Übertragungsvorrichtung 3, die rückseitig mit den weiteren Kraftübertragungsmitteln 4 gekoppelt ist. Die Antriebsvorrichtung 2 wird nachstehend mit Bezug auf Fig. 3a näher erläutert.

Fig. 2b zeigt die Antriebsvorrichtung 2 von Fig. 2a, erweitert mit zwei miteinander gekoppelten Kopplungsrädern 261, 262 und der schematisch gezeigten Bewegungskurve 9, entlang der die Betätigungselemente 291, 292 beim Betrieb der Antriebsvorrichtung 2 geführt werden.

Fig. 3a zeigt die erfindungsgemässe Antriebsvorrichtung 2 von Fig. 2a vereinzelt und in einer vergrösserten Ansicht. Jeder Antriebshebel 211; 212 ist über eine zwischen einem ersten und dem zweiten Hebelendstück 201, 202 angeordnete Primärwelle 241; 242 drehbar mit einem zugehörigen Primärhebel 221; 222 verbunden, der drehfest mit der Antriebswelle 34 verbunden ist. Die zweiten Endstücke der Antriebshebel 211; 212 sind je über eine Sekundärwelle 251, 252 und über einen Sekundärhebel 231, 232 vorzugsweise drehfest mit einer Hilfswelle 28 verbunden, die in der Lagervorrichtung 111 gehalten ist. Die Primärwellen 241; 242 und die Sekundärwellen 251; 252 jedes Antriebshebels 211; 212 sind durch Adaptionsvorrichtungen 2111, 2121 gegeneinander verschiebbar gehalten.

Die Adaptionsvorrichtungen 2111, 2121, die in dieser Ausgestaltung der Antriebsvorrichtung 2 an den zweiten Endstücken 202 der Antriebshebel 211, 212 vorgesehen sind, umfassen je einen Führungskanal 2110, 2120, in dem die zugehörige Sekundärwelle 251, 252 verschiebbar und drehbar gelagert ist.

Bei der Betätigung der Antriebshebel 211, 212 werden die Primärhebel 221, 222 um die Längsachse der Antriebswelle 34 gedreht, weshalb die Antriebshebel 211, 212 zusätzlich zur Horizontalbewegung eine Vertikalbewegung vollziehen. Damit die Antriebshebel 211, 212 diese Bewegung vollziehen können, ist der Führungskanal 2110, 2120 vorgesehen, welcher erlaubt, die zweiten Sekundärwellen 251, 252 gegenüber dem zugehörigen Antriebshebel 211, 212 zu verschieben.

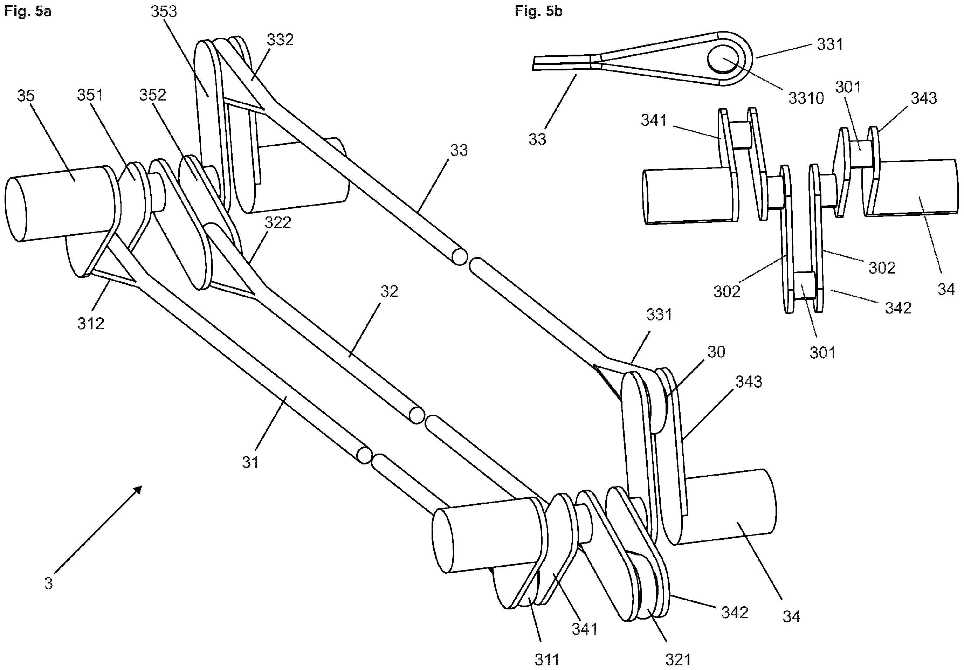

Die Antriebswelle 34 ist als Kurbelwelle ausgestaltet und weist in dieser vorzugsweisen Ausgestaltung drei Kurbeln auf, die je mit einem der Zugelemente 31, 32, 33 der erfindungsgemässen Übertragungsvorrichtung 3 verbunden sind, die nachstehend mit Bezug auf die Figuren 5a und 5b näher beschrieben wird.

Die Antriebswelle 34 und die Hilfswelle 28 sind hingegen parallel zueinander ausgerichtet von einer Lagervorrichtung 111, z.B. von zwei parallel zueinander ausgerichteten Lagerplatten der Rahmenstruktur 11 (siehe Fig. 1b), in einem festen Abstand zueinander drehbar gehalten. In vorzugsweisen Ausgestaltungen sind die Antriebswelle 34 und die Hilfswelle 28 durch Kopplungsmittel, wie Zahnräder oder Ketten, derart miteinander gekoppelt, dass sie stets synchron drehen.

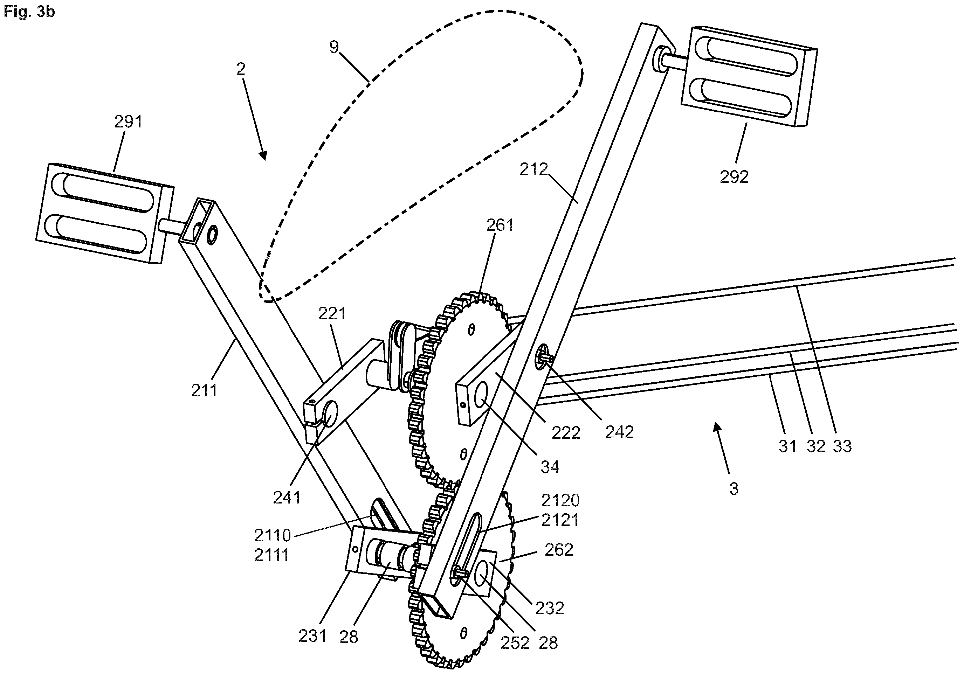

Fig. 3b zeigt die erfindungsgemässe Antriebsvorrichtung 2 von Fig. 2b mit der Bewegungskurve 9 sowie einem auf der Antriebswelle 34 angeordneten ersten Kopplungsrad 261 und einem auf der Hilfswelle 28 angeordneten zweiten Kopplungsrad 262, die als Zahnräder ausgebildet und über die Verzahnung miteinander gekoppelt sind. Die Antriebswelle 34 und die Hilfswelle 28 sind somit miteinander gekoppelt und weisen ebenso wie die Primärhebel 221, 222 und die Sekundärhebel 231, 232 gegenläufige Drehrichtungen auf. Konsequenterweise werden die Primärwellen 241, 242 und die Sekundärwellen 251, 252 zyklisch gegeneinander und auseinander geführt. Die Relativbewegung der Sekundärwellen 251, 252 wird dabei durch die zugehörige Adaptionsvorrichtung 2110, 2120 erlaubt.

Mittels der ineinander eingreifenden Kopplungsräder 261, 262 wird ein synchroner und gleichmässiger Ablauf der Bewegungen der Hebelelemente 211, 212; 221, 222; 231, 232 der Antriebsvorrichtung 2 gewährleistet. Die Antriebswelle 34 und die Hilfswelle 28 sind vorzugsweise koaxial zu den Antriebsachsen der Kopplungsräder 261, 262 angeordnet und fest mit diesen verbunden.

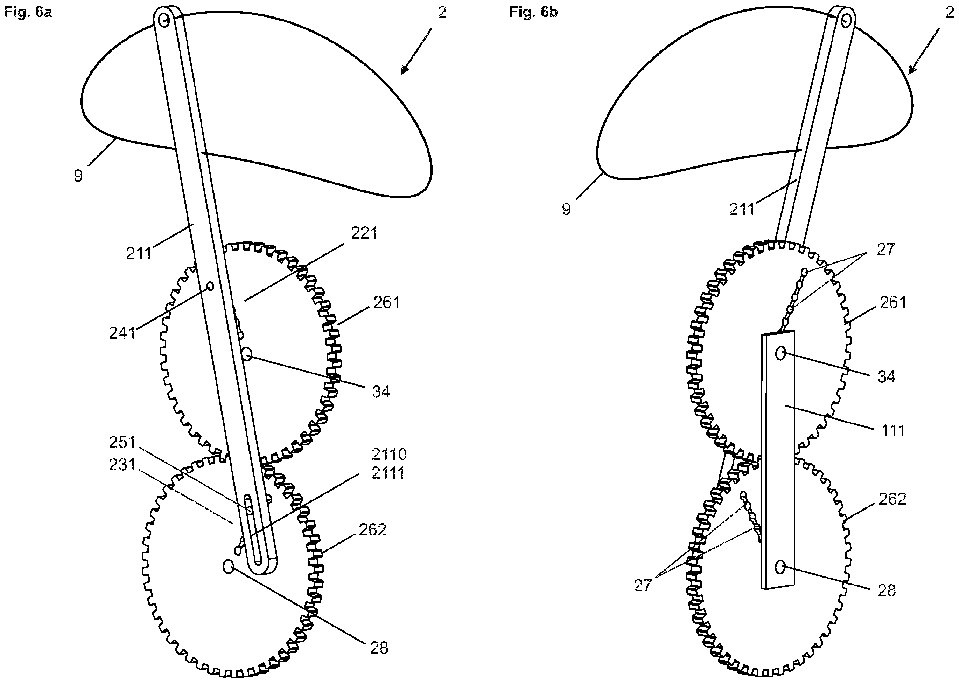

Der Primärhebel 222 und der Sekundärhebel 232, die vom zweiten Antriebshebel 212 bewegt werden, liegen direkt an den Kopplungsrädern 261, 262 an und können somit vorteilhaft in diese integriert werden. D.h., die entsprechende Primärwelle 242 und Sekundärwelle 252 können, wie z.B. in Fig. 6a gezeigt, integraler Bestandteil der Kopplungsräder 261, 262 sein, falls deren Radius gross genug ist. Zur symmetrischen Ausgestaltung der Antriebsvorrichtung 2 können Kopplungsräder 261, 262 auch am anderen Ende der Antriebswelle 34 und der Hilfswelle 28 vorgesehen werden und analog mit dem ersten Antriebshebel 211 gekoppelt werden. Die Primärhebel 221, 222 und Sekundärhebel 231, 232 können somit beidseits der Antriebsvorrichtung 2 in die zugeordneten Kopplungsräder 261, 262 integriert werden.

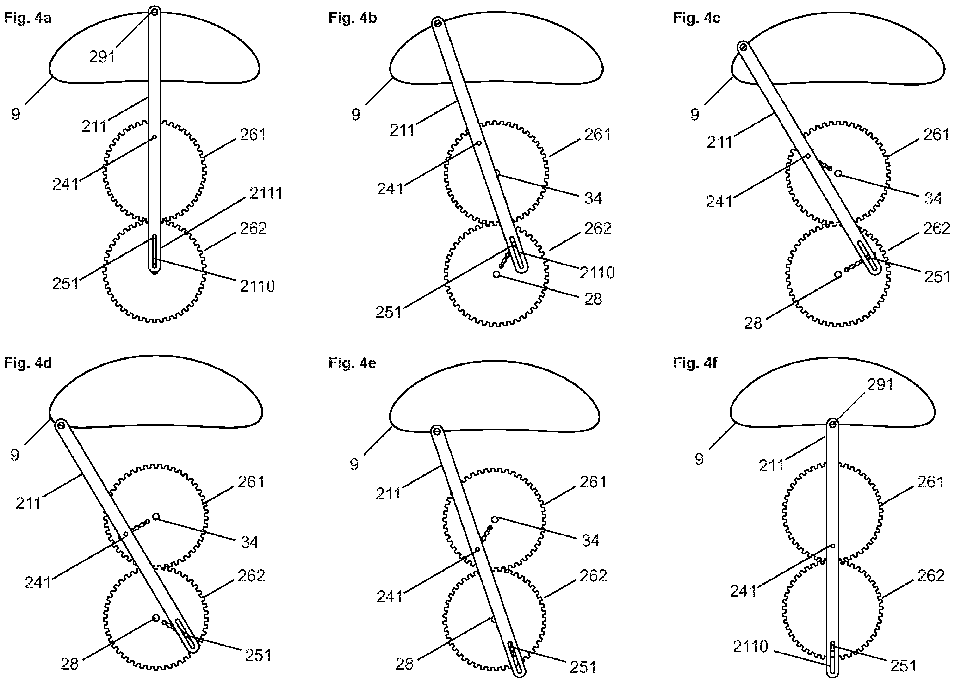

Die Figuren 4a bis 4f illustrieren den Bewegungsablauf der Antriebsvorrichtung 2 von Fig. 6a, währenddem das mit dem ersten Antriebshebel 211 verbundene Pedal 291 die Hälfte der Bewegungskurve 9 durchläuft. Die beiden Kopplungsräder 261, 262 vollziehen bei diesem Bewegungsablauf eine Drehung um 180° in entgegengesetzten Drehrichtungen, weshalb der Abstand zwischen der direkt mit dem ersten Kopplungsrad 261 verbundenen Primärwelle 241 und der direkt mit dem zweiten Kopplungsrad 262 verbundenen Sekundärwelle 251 ändert. Diese Abstandsänderung wird durch die Adaptionsvorrichtung 2111 kompensiert, indem sich die Sekundärwelle 251 innerhalb des Führungskanals 2110 der Adaptionsvorrichtung 2111 nach unten und wieder nach oben verschiebt.

Fig. 4a zeigt den ersten Antriebshebel 211 vertikal ausgerichtet mit dem Bedienungselement 291 oben in der Mitte der Bewegungskurve 9. In den Figuren 4b und 4c wird das Bedienungselement 291 entlang der Bewegungskurve 9 nach links und nach unten geführt. In den Figuren 4d, 4e und 4f wird das Bedienungselement 291 an der Unterseite der Bewegungskurve 9 nach rechts in die Mitte zurückgeführt. Der weitere Verlauf entlang der zweiten Hälfte der Bewegungskurve 9 erfolgt spiegelbildlich.

Fig. 5a zeigt die erfindungsgemässe Übertragungsvorrichtung 3 von Fig. 1b in einer vorzugsweisen Ausgestaltung mit drei Zugelementen 31, 32, 33, mittels denen eine erste Übertragungswelle 34, die identisch zur Antriebswelle 34 der Antriebsvorrichtung 2 ist, und eine zweite Übertragungswelle 35, die identisch zur ersten Übertragungswelle 34 ausgestaltet und identisch ausgerichtet ist, miteinander gekoppelt sind. Die Zugelemente 31, 32, 33, die beidseitig mit Kopplungselementen 311, 312, 321; 322; 331, 332 versehen sind, sind unterbrochen gezeigt und können grundsätzlich eine beliebige Länge aufweisen.

Die erste und die zweite Übertragungswelle 34, 35 sind als Kurbelwellen mit je drei Kurbeln 341, 342, 343 bzw. 351, 352, 353 ausgebildet, die je eines der Kopplungselemente 311, 312; 321, 322; 331, 332 halten, die wie in Fig. 5b für das Kopplungselement 331 gezeigt mit einer Lageröffnung 3310 versehen sind.

Fig. 5b zeigt die erste Übertragungswelle 34 von Fig. 5a mit den drei seitlich gegeneinander versetzten und um 120° gegeneinander verdrehten Kurbeln 341, 342, 343, die je zwei Kurbelplatten 302 aufweisen, die durch eine Lagerwelle 301 miteinander verbunden sind. Die Lagerwellen 301 sind durch die Lageröffnungen 3310 in den Kopplungselementen 311, 312, 321, 322; 331, 332 hindurch geführt und können relativ zu diesen oder mit diesen drehen. Zur Vermeidung von Reibungsverlusten können die Kopplungselemente 311, 312; 321, 322; 331, 332 mit Lagerelementen, wie Gleitlagern oder Wälzlagern, versehen sein.

Mittels der Zugelemente 31, 32, 33 wird die Antriebswelle bzw. erste Übertragungswelle 34 derart mit der zweiten Übertragungswelle 35 gekoppelt, dass diese synchron miteinander drehen. Die Kurbelpaare 341, 351; 342, 352; 343, 353 drehen ebenfalls synchron und bleiben parallel zueinander ausgerichtet. Die erfindungsgemässe Übertragungsvorrichtung 3 kann daher raumsparend praktisch universell für die Übertragung hoher Kräfte und hoher Antriebsmomente eingesetzt werden. Die Zugelemente 31, 32, 33 können hohen Zugkräften ausgesetzt werden und sind praktisch wartungsfrei. Zum Spannen der Zugelemente 31, 32, 33 kann vorgesehen werden, dass der Abstand zwischen den Lagervorrichtungen, mittels denen die erste und die zweite Übertragungswelle drehbar gehalten sind, justierbar ist. Alternativ können die Zugelemente selbst mit einem Spannmechanismus versehen werden, der es ermöglicht, ihre Länge einzustellen. Die Zugelemente 31, 32, 33 können raumsparend in einem Transmissionskanal 110 geführt werden, der einen sehr geringen Querschnitt aufweist. Zur Übertragung höherer Kräfte kann die Anzahl der Kurbeln und Zugelemente auch auf z.B. vier, fünf oder sechs erhöht werden. Die Zugelemente können als Seile, Drähte, Stäbe oder Rohre ausgebildet sein.

Fig. 6a zeigt einen Teil einer erfindungsgemässen Antriebsvorrichtung 2 in einer ersten Ausgestaltung nur mit dem ersten Antriebshebel 211, der durch die Primärwelle 241 direkt mit dem ersten Kopplungsrad 261 und durch die in der Adaptionsvorrichtung 2111 bzw. im entsprechenden Führungskanal 2110 gehaltene Sekundärwelle 251 mit dem zweiten Kopplungsrad 262 verbunden ist.

In der gezeigten Ausgestaltung weisen die Kopplungsräder 261, 262 je eine Serie von Aufnahmeöffnungen 27 auf, die radial entlang einer Linie vorgesehen sind und die vorzugsweise zylindrisch ausgebildet sind. In die Aufnahmeöffnungen 27 sind die Primärwellen 241, 242 bzw. die Sekundärwellen 251, 252 wahlweise einsetzbar. Durch die Veränderung der Position der Primärwellen 241, 242 bzw. die Sekundärwellen 251, 252 sind Änderungen der Bewegungskurve 9 und des Übersetzungsverhältnisses einstellbar. Das erste Kopplungsrad 261 ist stoff-/form- oder kraftschlüssig mit der Antriebswelle 34 verbunden, so dass die Rotation des ersten Kopplungsrades 261 an die Antriebswelle 34 übertragen wird.

Fig. 6b zeigt den Teil der Antriebsvorrichtung 2 von Fig. 6a von der anderen Seite. Die Antriebswelle 34 und die Hilfswelle 28 sind über eine Lagerplatte 111, welche vorzugsweise an der Rahmenstruktur 11 angeformt ist, miteinander verbunden. Durch diese Verbindung ist die relative Position des ersten Kopplungsrades 261 und das zweiten Kopplungsrades 262 fixiert.

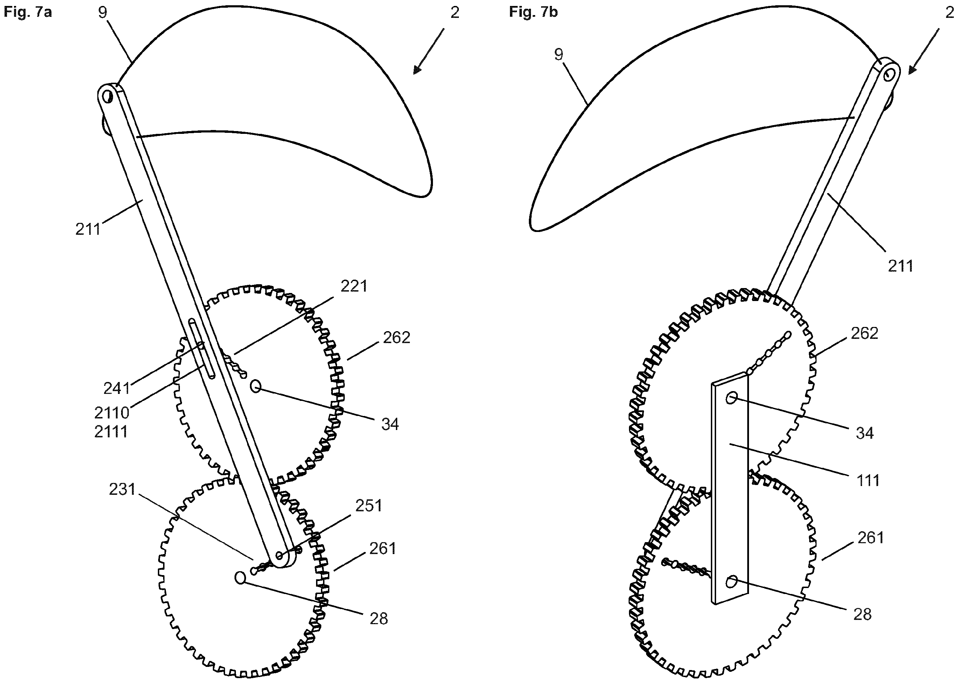

Fig. 7a zeigt einen Teil einer erfindungsgemässen Antriebsvorrichtung 2 in einer zweiten Ausgestaltung nur mit dem ersten Antriebshebel 211, der durch die in der Adaptionsvorrichtung 2111 bzw. im entsprechenden Führungskanal 2110 gehaltene Primärwelle 241 mit dem ersten Kopplungsrad 261 und durch die Sekundärwelle 251 direkt mit dem zweiten Kopplungsrad 262 verbunden ist.

Fig. 7b zeigt den Teil der Antriebsvorrichtung 2 von Fig. 7a von der anderen Seite mit einer symbolisch gezeigten Lagerplatte 111, mittels der die Antriebswelle 34 und die Hilfswelle 28 der Antriebsvorrichtung 2 gehalten sind.

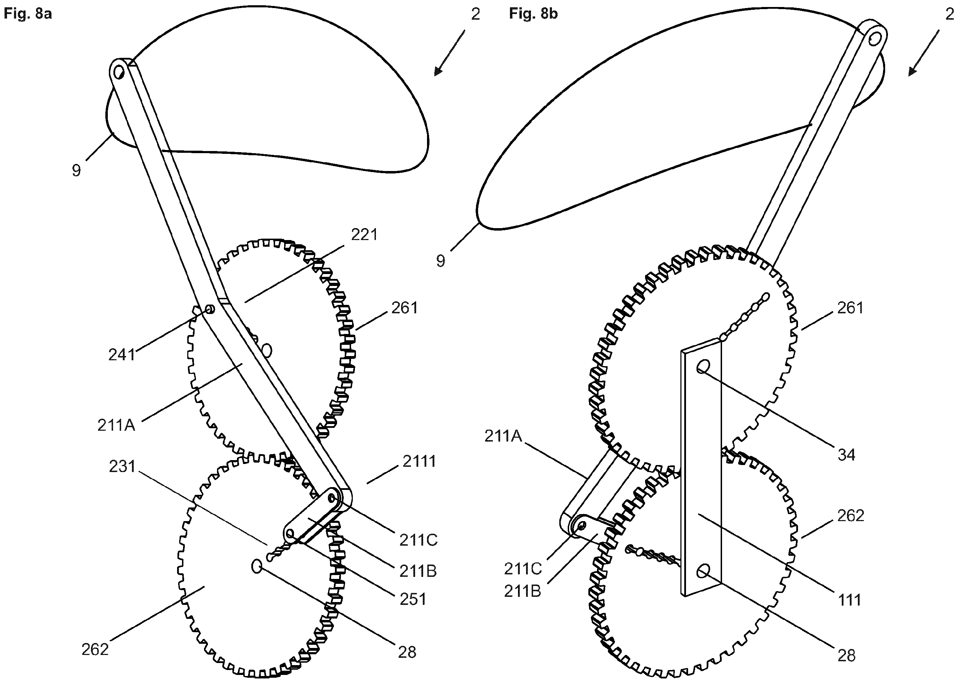

Fig. 8a zeigt einen Teil einer erfindungsgemässen Antriebsvorrichtung 2 in einer dritten Ausgestaltung nur mit dem ersten Antriebshebel 211, der durch die Primärwelle 241 direkt mit dem ersten Kopplungsrad 261 und weiter über einen ersten Hebelabschnitt 211A, ein Hebelgelenk 211C und einen zweiten Hebelabschnitt 211B sowie die Sekundärwelle 251 mit dem zweiten Kopplungsrad 262 verbunden ist. Die Adaptionsvorrichtung 2111 ist in dieser Ausgestaltung vorteilhaft durch den ersten und zweiten Hebelabschnitt 211A, 211B und das den ersten und zweiten Hebelabschnitt 211A, 211B verbindende Hebelgelenk 211C realisiert. Bei einer gegenseitigen Verschiebung der Primärwellen 241, 242 und der Sekundärwellen 251, 252 ändert der Winkel zwischen den beiden Hebelabschnitten 211A, 211B, bei der eine Reibung praktisch vollständig vermieden wird.

Fig. 8b zeigt den Teil der Antriebsvorrichtung 2 von Fig. 8a von der anderen Seite mit einer symbolisch gezeigten Lagerplatte 111, mittels der die Antriebswelle 34 und die Hilfswelle 28 der Antriebsvorrichtung 2 gehalten sind.

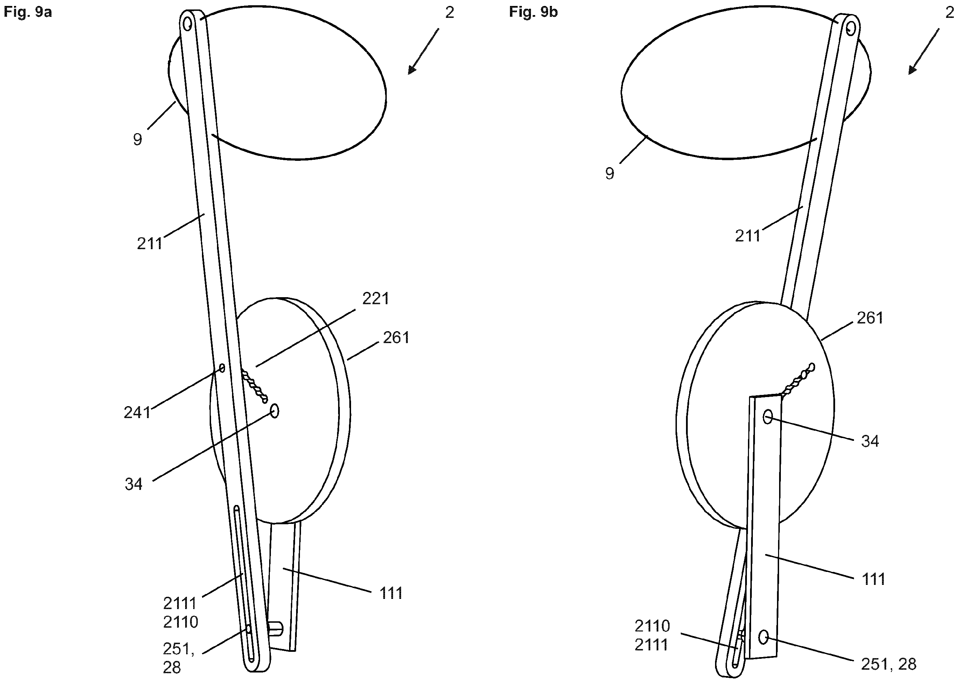

Fig. 9a zeigt einen Teil einer erfindungsgemässen Antriebsvorrichtung 2 in einer vierten Ausgestaltung nur mit dem ersten Antriebshebel 211, der durch die Primärwelle 241 direkt mit dem ersten Kopplungsrad 261 und über die Adaptionsvorrichtung 2111 bzw. den Führungskanal 2110 direkt mit der Hilfswelle 28 verbunden ist, die gleichzeitig die Sekundärwelle 251 bildet, die in den Führungskanal 2110 eingreift.

Fig. 9b zeigt den Teil der Antriebsvorrichtung 2 von Fig. 9a von der anderen Seite mit einer symbolisch gezeigten Lagerplatte 111, mittels der die Antriebswelle 34 und die Hilfswelle 28 der Antriebsvorrichtung 2 gehalten sind.

### Bezugszeichenliste

- 1: Transportmittel
- 11: Rahmenstruktur
- 110: Transmissionskanal
- 111: Lagervorrichtung, Lagerplatte
- 121, 122, 123: Laufräder
- 13: Liegesitz
- 2: Antriebsvorrichtung
- 201: erstes Hebelendstück
- 202: zweites Hebelendstück
- 211: erster Antriebshebel
- 2110: Führungskanal
- 2111: Adaptionsvorrichtung
- 211A: erster Hebelabschnitt
- 211B: zweiter Hebelabschnitt
- 211C: Hebelgelenk
- 212: zweiter Antriebshebel
- 2120: Führungskanal
- 2121: Adaptionsvorrichtung
- 221, 222: Primärhebel
- 231, 232: Sekundärhebel
- 241, 242: Primärwelle
- 251, 252: Sekundärwelle, Führungsstift
- 261: erstes Kopplungsrad
- 262: zweites Kopplungsrad
- 27: Aufnahmeöffnungen in den Kopplungsrädern
- 28: Hilfswelle
- 291, 292: Betätigungselemente, Pedalen
- 3: Übertragungsvorrichtung
- 301: Kurbelwellenelemente
- 302: Kurbelplatten
- 31 32, 33: Zugelemente
- 311, 312, 321, 322, 331, 332: Kopplungselemente
- 3310: Lageröffnung im Kopplungselement 331
- 34: Antriebswelle, erste Übertragungswelle
- 341, 342, 343: erste Kurbeln
- 35: zweite Übertragungswelle
- 351, 352, 353: zweite Kurbeln
- 36: zus. Lagerpunkte für Übertragungswelle
- 4: weitere Kraftübertragungsmittel
- 41: erstes Kraftübertragungsrad
- 42: Übertragungsmittel, Kette, Riemen
- 43: zweites Kraftübertragungsrad
- 9: Bewegungskurve

## Patentansprüche

1. Antriebsvorrichtung (2) insbesondere für ein Transportmittel (1) mit einem ersten und einem zweiten Antriebshebel (211, 212),
a) die erste Hebelendstücke (201) aufweisen, an denen vorzugsweise ein Betätigungselement (291, 292) vorgesehen ist,
b) die zweite Hebelendstücke (202) aufweisen, die miteinander gekoppelt sind,
c) die in vorzugsweise zueinander parallelen und voneinander beabstandeten Ebenen drehbar gehalten sind, und
d) die mit einer Antriebswelle (34) gekoppelt sind, die in einer Lagervorrichtung (111) drehbar gelagert ist;
**dadurch gekennzeichnet, dass**
jeder Antriebshebel (211; 212) über eine zwischen dem ersten und dem zweiten Hebelendstück (201, 202) angeordnete Primärwelle (241; 242) drehbar mit einem zugehörigen Primärhebel (221; 222) verbunden ist, der drehfest mit der Antriebswelle (34) verbunden ist; dass
die zweiten Hebelendstücke (202) je direkt oder über eine Sekundärwelle (251; 252) und einen Sekundärhebel (231; 232) mit einer Hilfswelle (28) verbunden sind, die in der Lagervorrichtung (111) gehalten ist; und dass
die Primärwellen (241; 242) und die Sekundärwellen (251; 252) jedes Antriebshebels (211; 212) durch Adaptionsvorrichtungen (2111; 2121) gegeneinander verschiebbar gehalten sind.

2. Antriebsvorrichtung (2) nach Anspruch 1, **dadurch gekennzeichnet, dass** die Adaptionsvorrichtungen (2111, 2121)
a) einen im zugehörigen Antriebshebel (211, 212) vorgesehenen und vorzugsweise parallel dazu ausgerichteten Führungskanal (2110, 2120) aufweisen, innerhalb dessen die zugehörige Primärwelle (241, 242) oder die zugehörige Sekundärwelle (251, 252) verschiebbar und drehbar gelagert ist; oder
b) gelenkig ausgebildete Antriebshebel (211, 212) umfassen, die zwischen den Primärwellen (241, 242) und den Sekundärwellen (251, 252) einen ersten und einen zweiten Hebelabschnitt (211A, 211B) aufweisen, die durch ein Hebelgelenk (211C) miteinander verbunden sind.

3. Antriebsvorrichtung (2) nach Anspruch 1 oder 2, **dadurch gekennzeichnet, dass** die Antriebswelle (34) wenigstens ein erstes Kopplungsrad (261) drehfest hält, welches gegebenenfalls exzentrisch mit der zugehörigen Primärwelle (241; 242) verbunden ist, sodass der zugehörige Primärhebel (221, 222) Teil des ersten Kopplungsrads (261) ist, und dass die Hilfswelle (28) vorzugsweise ein zweites Kopplungsrad (262) drehfest hält, welches gegebenenfalls exzentrisch mit der zugehörigen Sekundärwelle (251; 252) verbunden ist, sodass der zugehörige Sekundärhebel (231, 232) Teil des zweiten Kopplungsrads (262) ist, und dass das erste und das zweite Kopplungsrad (261, 262) und somit die Antriebswelle (34) und die Hilfswelle (28) vorzugsweise mittels Verzahnungen miteinander gekoppelt sind.

4. Antriebsvorrichtung (2) nach Anspruch 1, 2 oder 3, **dadurch gekennzeichnet, dass** der Abstand der Primärwellen (241, 242) von der Antriebswelle (34) und/oder der Abstand der Sekundärwellen (251, 252) von der Hilfswelle (28) manuell oder mittels eines Motors wahlweise festlegbar ist.

5. Antriebsvorrichtung (2) nach Anspruch 4, **dadurch gekennzeichnet, dass** die der Abstand der Primärwellen (241, 242) von der Antriebswelle (34) und/oder der Abstand der Sekundärwellen (251, 252) von der Hilfswelle (28) durch entsprechende Positionierung der Primärwellen (241, 242) oder Sekundärwellen (251, 252) am ersten oder zweiten Kopplungsrad (261; 262) oder durch Einstellung der Länge der Primärhebel (221, 222) oder der Sekundärhebel (231, 232) festlegbar ist.

6. Antriebsvorrichtung (2) nach einem der Ansprüche 1-5, **dadurch gekennzeichnet, dass** die Antriebswelle (34) mit einer Übertragungsvorrichtung (3) gekoppelt ist, die eine erste Übertragungswelle (34) aufweist, die vorzugsweise identisch zur Antriebswelle (34) ist, und die mit Kraftübertragungsmitteln, wie einer Antriebskette oder einem Kardanantrieb gekoppelt ist.

7. Antriebsvorrichtung (2) nach Anspruch 6, **dadurch gekennzeichnet, dass** die erste und eine zweite Übertragungswelle (34) als Kurbelwellen ausgestaltet und durch Zugelemente (31, 32, 33) miteinander verbunden sind, die vorzugsweise als Seile oder Zugstäbe ausgebildet sind.

8. Antriebsvorrichtung (2) nach Anspruch 7, **dadurch gekennzeichnet, dass** an der ersten Übertragungswelle (34) entlang deren Längsachse seitlich versetzt erste Kurbeln (341, 342, 343) angeordnet sind, die je durch eines der Zugelemente (31, 32, 33) mit einem von mehreren zweiten Kurbeln (351, 352, 353) verbunden sind, die an der zweiten Übertragungswelle (35) entlang deren Längsachse seitlich versetzt angeordnet sind.

9. Antriebsvorrichtung (2) nach Anspruch 7, 8 oder 9, **dadurch gekennzeichnet, dass** an der ersten Übertragungswelle (34) drei oder mehr erste Kurbeln (341, 342, 343) und an der zweiten Übertragungswelle (35) vorzugsweise drei oder mehr zweite Kurbeln (351, 352, 353) vorgesehen sind, die schrittweise um 120° um die erste bzw. zweite Übertragungswelle (34; 35) gegeneinander verdreht derart ausgerichtet sind, dass die zueinander korrespondierenden ersten und zweiten Kurbeln (341, 351; 342, 352; 343, 353) zumindest annähernd parallel zueinander ausgerichtet sind.

10. Antriebsvorrichtung (2) nach einem der Ansprüche 7 - 9, **dadurch gekennzeichnet, dass** die ersten und zweiten Kurbeln (341, 342, 343; 351, 352, 353), die Segmente der ersten bzw. zweiten Übertragungswelle (34; 35) bilden, zwei Kurbelplatten (302) aufweisen, die mit benachbarten Teilen der ersten bzw. zweiten Übertragungswelle (34; 35) verbunden sind und die durch Kurbelwellenelemente (301) miteinander verbunden sind, die dem Halten je eines Kopplungselements (311, 312, 321; 322, 331, 332) dienen, die an den Enden der Zugelemente (31, 32, 33) vorgesehen sind.

11. Transportmittel (1) mit einer Antriebsvorrichtung (2) nach einem der Ansprüche 1 bis 10, wie von einer Rahmenstruktur (11) gehalten ist.

12. Transportmittel (1) nach Anspruch 11, **dadurch gekennzeichnet, dass** das Transportmittel (1) als Liegerad mit zwei, drei oder mehr Laufrädern (121, 122, 123) ausgebildet ist und einen auf der Rahmenstruktur (11) angeordneten Liegesitz (13) aufweist.

13. Transportmittel (1) nach Anspruch 11 oder 12, **dadurch gekennzeichnet, dass** eine mit der Antriebsvorrichtung (2) gekoppelte Übertragungsvorrichtung (3) nach einem der Ansprüche 6 bis 10 vorgesehen ist, mit Zugelementen (31, 32, 33), die der Übertragung der Antriebskraft und Antriebsmomente der Antriebsvorrichtung (2) gegebenenfalls auf weitere Übertragungsmittel (4) oder auch direkt auf die Achse eines Laufrads dienen.

14. Transportmittel (1) nach Anspruch 11 oder 12, **dadurch gekennzeichnet, dass** die Zugelemente (31, 32, 33) innerhalb eines Transmissionskanals (110) der Rahmenstruktur (11) angeordnet sind.

15. Transportmittel (1) nach Anspruch 11, 12 oder 13, **dadurch gekennzeichnet, dass** das Transportmittel (1) einen vorzugsweise zumindest teilweise in die Rahmenstruktur integrierten Motor, vorzugsweise einen Elektromotor, als Unterstützungsantrieb, umfasst.
